# EUROPEAN PATENT APPLICATION

(11) **EP 4 741 583 A1**
(43) Date of publication of application: **13.05.2026**
(21) Application number: 24211421.3
(22) Date of filing: 07.11.2024
(51) Int. Cl.: E02F 9/20

(54) **CONFIGURING TIMESTAMPED ACTIONS FOR A CONSTRUCTION MACHINE**

(71) Applicant: Volvo Construction Equipment AB, 631 85 Eskilstuna (SE)
(72) Inventor: ANDRÉN ZACHRISSON, Erik, 633 56 ESKILSTUNA (SE); PLATTONEN, Pasi, 632 33 ESKILSTUNA (SE)
(74) Representative: Kransell & Wennborg KB

(57) **Abstract**

There is disclosed a computer system comprising processing circuitry. A wake-up request is received at a telematics gateway (108) in a construction machine from an on-board machine application in the construction machine. A timer is set in the telematics gateway (108) based on a control action and a timestamp. Responsive to the timer expiring, the system action and the timestamp is sent from the telematics gateway (108) to a communication bus implemented in the construction machine. The telematics gateway (108) initiates the machine master electric controller to wake up from an unpowered state. The machine master electric controller reads the system action and the timestamp on the communication bus. The machine master electric controller acknowledges receipt of the system action and the timestamp to the telematics gateway (108).

## Description

### TECHNICAL FIELD

The disclosure relates generally to a construction machine. In particular aspects, the disclosure relates to configuring timestamped actions to be performed in a construction machine. The disclosure can be applied to heavy-duty construction equipment, among other construction machine types. Although the disclosure may be described with respect to a particular construction machine, the disclosure is not restricted to any particular construction machine.

### BACKGROUND

In the field of construction machinery, ensuring optimal functionality and reliability of the machine may be critical to maintaining productivity. One aspect that operators may need to manage is the behavior of the construction machine when it is not in use, particularly after a shutdown. Construction machines often remain idle for extended periods, and during such times, the construction machine's electronics and various systems need to be managed effectively to conserve energy. This is especially important because the state of charge of the construction machine's starter battery directly impacts the operator's ability to restart the construction machine when needed.

For an operator, one concern may be the ability to start the construction machine and its engine at any time, even after it has been shut down for a long period. Construction machines are typically equipped with numerous electronic components and systems that assist in their operation. These include telematics systems, controllers, sensors, and communication buses. However, many of these electronic components continue to consume power, even when the construction machine is turned off, which can lead to a significant drain on the starter battery.

To address this concern, almost all electronics within the construction machine must be shut down after the operator has performed a key-off procedure, which is the standard process for turning off the construction machine. The key-off procedure signals the end of the construction machine's active state, and the electronics are expected to power down. One reason for this is to prevent the battery from reaching critically low levels of charge. If the electronics continue to consume power while the construction machine is off, the starter battery may eventually be depleted to a point where the construction machine cannot be restarted. In such a scenario, the operator would need to recharge or replace the battery, causing delays and potentially reducing overall machine availability.

Starter battery management is therefore one aspect of construction machine operation. Given the heavy reliance on electronic systems in modern machinery, ensuring that these systems do not continue to drain power after shutdown is essential. If the battery charge drops too low, it may not be possible for the operator to start the construction machine or its engine without first recharging the battery. This situation can result in machine downtime and a loss of productivity on the job site, which can be costly in terms of both time and labor.

Consequently, there is a need to manage construction machine behavior and the operation of electronic systems in a manner that ensures the battery retains enough charge for the operator to reliably start the construction machine when necessary.

### SUMMARY

Management of construction machine behavior may involve having efficient control over which systems remain operational during machine idle states and which should be powered down to preserve battery life. At the same time, the operator may have the ability to configure the machine's future behavior, particularly in relation to starting and controlling the machine's actions after a key-off event. The herein disclosed embodiments therefore generally relate to managing the balance between power consumption and machine readiness.

According to a first aspect of the disclosure, there is disclosed a computer system comprising processing circuitry. The processing circuitry is configured to receive a wake-up request at a telematics gateway in a construction machine from an on-board machine application in the construction machine, the wake-up request comprising a control action for the telematics gateway, a timestamp, and a system action for the construction machine. The processing circuitry is configured to set a timer in the telematics gateway based on the control action and the timestamp. The processing circuitry is configured to send, responsive to the timer expiring, the system action and the timestamp from the telematics gateway to a communication bus implemented in the construction machine. The processing circuitry is configured to initiate, by the telematics gateway, the machine master electric controller to wake up from an unpowered state. The processing circuitry is configured to read, by the machine master electric controller, the system action and the timestamp on the communication bus. The processing circuitry is configured to acknowledge receipt of the system action and the timestamp by the machine master electric controller to the telematics gateway. The first aspect of the disclosure may seek to managing the balance between power consumption and machine readiness. A technical benefit may include provision of an efficient wake-up and communication process between different components (telematics gateway, machine master electric controller, etc.) in a construction machine. This reduces power consumption by ensuring the construction machine only wakes up essential components when required, enhancing overall energy efficiency in the construction machine.

Optionally in some examples, including in at least one preferred example, the control action pertains to at least one of: setting the timer, updating the timer, cancelling the timer, listing all set timers. A technical benefit may include providing flexibility in managing the timer in the telematics gateway. This allows for dynamic control of machine operations by enabling setting, updating, and cancelling timers as needed, improving operational flexibility and responsiveness.

Optionally in some examples, including in at least one preferred example, the system action pertains to at least one of: preheating, cooling, ventilating the construction machine, turn on/off work lights in the construction machine, stop/start battery charging of the construction machine, perform on-board diagnostics in the construction machine, waking up a machine application controller in the construction machine. A technical benefit may include provision of control over various system actions like preheating, cooling, and diagnostics through the wake-up request. This enhances the machine readiness and operability by allowing pre-emptive actions, such as heating or diagnostics, before full machine startup, which can optimize uptime and machine performance.

Optionally in some examples, including in at least one preferred example, the processing circuitry is further configured to: perform an error check of the wake-up request by the telematics gateway before setting the timer. A technical benefit may include the provision of error checking before the timer is set. This increases system reliability by ensuring that erroneous wake-up requests do not proceed, reducing the risk of unintended machine behavior or malfunctions.

Optionally in some examples, including in at least one preferred example, the timer is run by a real-time clock in the telematics gateway whilst rest of functionality of the gateway is in a sleep state. A technical benefit may include the provision of enabling the timer to operate independently via a real-time clock, even while other components are in a low-power sleep state. This extends battery life and reduces unnecessary power consumption by allowing essential timing functions to occur without needing the entire system to be powered on.

Optionally in some examples, including in at least one preferred example, the processing circuitry is further configured to cause the telematics gateway to initiate the machine master electric controller to be woken up from the unpowered state by setting a digital output that is connected to an electrically controlled switch that powers the machine master electric controller. A technical benefit may include enabling the machine master electric controller to be powered up through an electrically controlled switch. This ensures precise and efficient activation of the machine master electric controller, improving power management and reducing delays in waking up the system.

Optionally in some examples, including in at least one preferred example, the processing circuitry is further configured to continuously send the system action and the timestamp from the telematics gateway to the communication bus until the telematics gateway having receiving acknowledgement of receipt from the machine master electric controller. A technical benefit may include ensuring continuous transmission of system messages until acknowledged. This increases reliability of the communication between the telematics gateway and the machine master electric controller, ensuring that critical commands are not missed, leading to better system performance.

Optionally in some examples, including in at least one preferred example, the processing circuitry is further configured to initiate, by the machine master electric controller, the system action in accordance with the timestamp. A technical benefit may include the machine master electric controller being able to initiate the system action based on the wake-up request. This enables automated execution of pre-configured actions without manual intervention, improving automation and reducing response times in machine operations.

Optionally in some examples, including in at least one preferred example, the processing circuitry is further configured to receive an update to the wake-up request at the telematics gateway from the on-board machine application or a human machine interface, wherein the update to the wake-up request pertains to any of: cancelling the wake-up request, changing the timestamp, changing the system action, deleting the wake-up request. A technical benefit may include allowing modifications to be made to the wake-up request by either the on-board application or a human interface. This provides greater user control and flexibility in managing machine operations, improving operational adaptability and user experience.

According to a second aspect of the disclosure, there is disclosed a construction machine comprising the computer system of the first aspect and any of its examples. A technical benefit may include the integration of the aforementioned computer system into a construction machine. This provides enhanced machine functionality by incorporating a flexible and automated control system, leading to better machine efficiency, power management, and usability.

According to a third aspect of the disclosure, there is disclosed a computer-implemented method for configuring timestamped actions to be performed in a construction machine where a machine master electric controller is in an unpowered state. The method is performed by processing circuitry of a computer system. The method comprises receiving a wake-up request at a telematics gateway in the construction machine from an on-board machine application in the construction machine, the wake-up request comprising a control action for the telematics gateway, a timestamp, and a system action for the construction machine. The method comprises setting a timer in the telematics gateway based on the timestamp. The method comprises sending, responsive to the timer expiring, the system action and the timestamp from the telematics gateway to a communication bus implemented in the construction machine. The method comprises initiating, by the telematics gateway, the machine master electric controller to wake up from the unpowered state. The method comprises reading, by the machine master electric controller, the system action and the timestamp on the communication bus; and acknowledging receipt of the system action and the timestamp by the machine master electric controller to the telematics gateway. A technical benefit may include provision of an efficient wake-up and communication process between different components (telematics gateway, machine master electric controller, etc.) in a construction machine. This reduces power consumption by ensuring the construction machine only wakes up essential components when required, enhancing overall energy efficiency in the construction machine.

Optionally in some examples, including in at least one preferred example, the control action pertains to at least one of: setting the timer, updating the timer, cancelling the timer, listing all timers. A technical benefit may include providing flexibility in managing the timer in the telematics gateway. This allows for dynamic control of machine operations by enabling setting, updating, and cancelling timers as needed, improving operational flexibility and responsiveness.

Optionally in some examples, including in at least one preferred example, the system action pertains to at least one of: preheating, cooling, ventilating the construction machine, turn on/off work lights in the construction machine, stop/start battery charging of the construction machine, perform on-board diagnostics in the construction machine, waking up a machine application controller in the construction machine. A technical benefit may include provision of control over various system actions like preheating, cooling, and diagnostics through the wake-up request. This enhances the machine readiness and operability by allowing pre-emptive actions, such as heating or diagnostics, before full machine startup, which can optimize uptime and machine performance.

Optionally in some examples, including in at least one preferred example, the method further comprises performing an error check of the wake-up request by the telematics gateway before setting the timer. A technical benefit may include the provision of error checking before the timer is set. This increases system reliability by ensuring that erroneous wake-up requests do not proceed, reducing the risk of unintended machine behavior or malfunctions.

Optionally in some examples, including in at least one preferred example, the telematics gateway initiates the machine master electric controller to be woken up from the unpowered state by setting a digital output that is connected to an electrically controlled switch that powers the machine master electric controller. A technical benefit may include enabling he machine master electric controller to be powered up through an electrically controlled switch. This ensures precise and efficient activation of the machine master electric controller, improving power management and reducing delays in waking up the system.

Optionally in some examples, including in at least one preferred example, the system action and the timestamp are continuously sent from the telematics gateway to the communication bus until the telematics gateway having receiving acknowledgement of receipt from the machine master electric controller. A technical benefit may include ensuring continuous transmission of system messages until acknowledged. This increases reliability of the communication between the telematics gateway and the machine master electric controller, ensuring that critical commands are not missed, leading to better system performance.

Optionally in some examples, including in at least one preferred example, the method further comprises initiating, by the machine master electric controller, the system action and in accordance with the timestamp. A technical benefit may include the machine master electric controller being able to initiate the system action based on the wake-up request. This enables automated execution of pre-configured actions without manual intervention, improving automation and reducing response times in machine operations.

Optionally in some examples, including in at least one preferred example, the method further comprises receiving an update to the wake-up request at the telematics gateway from the on-board machine application or a human machine interface, wherein the update to the wake-up request pertains to any of: cancelling the wake-up request, changing the timestamp, changing the system action, deleting the wake-up request. A technical benefit may include allowing modifications to be made to the wake-up request by either the on-board application or a human interface. This provides greater user control and flexibility in managing machine operations, improving operational adaptability and user experience.

According to a third aspect of the disclosure, there is disclosed a computer program product comprising program code for performing, when executed by the processing circuitry, the method of the third aspect and any of its examples. A technical benefit may include the provision of the aforementioned computer system as a computer program product. This provides enhanced machine functionality by incorporating a flexible and automated control system, leading to better machine efficiency, power management, and usability.

According to a fourth aspect of the disclosure, there is disclosed a non-transitory computer-readable storage medium comprising instructions, which when executed by the processing circuitry, cause the processing circuitry to perform the method of the third aspect and any of its examples. A technical benefit may include the provision of the aforementioned computer system on a non-transitory computer-readable storage medium. This provides enhanced machine functionality by incorporating a flexible and automated control system, leading to better machine efficiency, power management, and usability.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary system diagram of a machine control system of a construction machine according to an example.
**FIG. 2** is a flow chart of an exemplary method for configuring timestamped actions to be performed in a construction machine according to an example.
**FIG. 3** is a signaling diagram of an exemplary method for configuring timestamped actions to be performed in a construction machine according to an example.
**FIG. 4** is an exemplary illustration of a construction machine according to an example.
**FIG. 5** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

As disclosed above, management of construction machine behavior may involve having efficient control over which systems remain operational during machine idle states and which should be powered down to preserve battery life. At the same time, the operator may have the ability to configure the machine's future behavior, particularly in relation to starting and controlling the machine's actions after a key-off event. The herein disclosed embodiments therefore generally relate to managing the balance between power consumption and machine readiness.

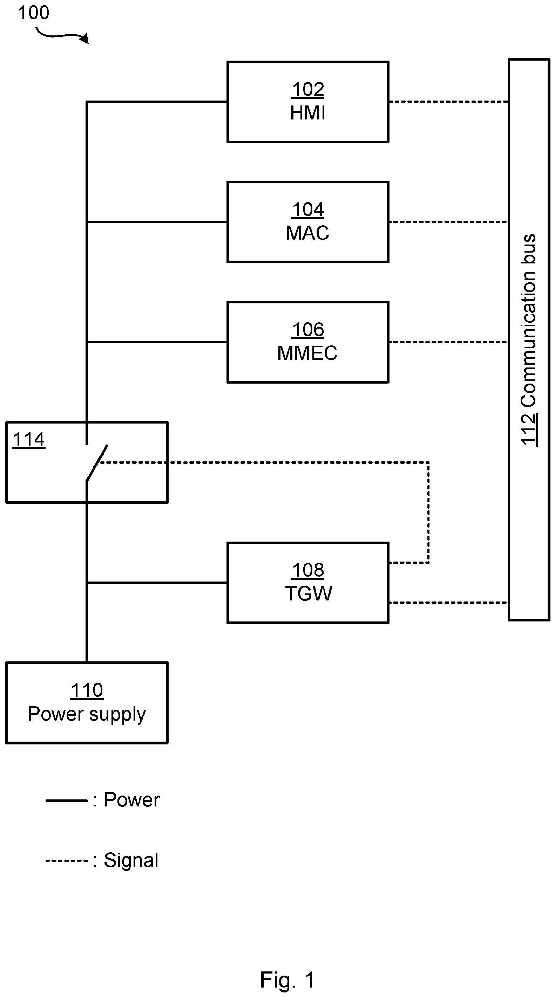

**FIG. 1** is an exemplary system diagram of a machine control system **100** of a construction machine according to an example. A human machine interface (HMI) **102,** a machine application controller (MAC) **104,** a machine master electric controller (MMEC) **106,** and a telematics gateway (TGW) **108,** are all powered by a power supply **110.** The power supply **110** may be a battery or the like. Further, the human machine interface **102,** the machine application controller **104,** the power master electric controller **106,** and the telematics gateway **108** are configured to communicate with each other over a communication bus **112.** Further, the telematics gateway **108** is further configured to control a switch **114** and thereby control the delivery of power supply to the human machine interface **102,** the machine application controller **104,** and the power master electric controller **106.**

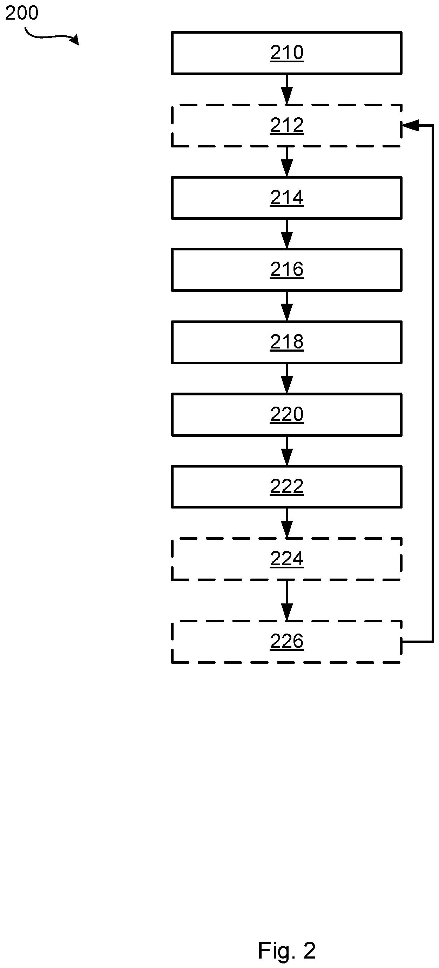

Reference is next made to FIG. 2. **FIG. 2** is a flow chart of an exemplary computer-implemented method **200** for configuring timestamped actions to be performed in a construction machine according to an example. The machine master electric controller **106** is in an unpowered state. Optional actions are illustrated using dashed lines.

Action **210:** The telematics gateway **108** in the construction machine receives a wake-up request from an on-board machine application in the construction machine. The wake-up request comprises a control action for the telematics gateway **108,** a timestamp, and a system action for the construction machine. There may be different examples of control actions. In some embodiments, the control action pertains to at least one of: setting the timer, updating the timer, cancelling the timer, listing all timers. Likewise, there may be different examples of system actions. In some embodiments, the system action pertains to at least one of: preheating, cooling, ventilating the construction machine, turn on/off work lights in the construction machine, stop/start battery charging of the construction machine, perform on-board diagnostics in the construction machine, waking up the machine application controller **104** in the construction machine.

Action **212** (optional): The telematics gateway **108** performs an error check of the wake-up request.

Action **214:** The telematics gateway **108** sets a timer in the telematics gateway **108** based on the timestamp. In some embodiments, the timer is run by a real-time clock in the telematics gateway **108** whilst rest of functionality of the gateway is in a sleep state.

Action **216:** The telematics gateway **108,** responsive to the timer expiring, sends the system action and the timestamp to a communication bus **112** implemented in the construction machine. In some embodiments, the system action and the timestamp are continuously sent from the telematics gateway **108** to the communication bus **112** until the telematics gateway **108** having receiving acknowledgement of receipt from the machine master electric controller **106.** Thus, upon reception of acknowledgement from the machine master electric controller **106,** the telematics gateway **108** stops sending the message and deasserts the wakeup.

Action **218:** The telematics gateway **108** initiates the machine master electric controller **106** to wake up from the unpowered state. In some embodiments, the telematics gateway **108** initiates the machine master electric controller **106** to be woken up from the unpowered state by setting a digital output that is connected to an electrically controlled switch that powers the machine master electric controller **106.**

Action **220:** The machine master electric controller **106** reads the system action and the timestamp on the communication bus **112.**

Action **222:** The machine master electric controller **106** acknowledges receipt of the system action and the timestamp to the telematics gateway **108.**

Action **224** (Optional): The machine master electric controller **106** initiates the system action and in accordance with the timestamp.

Action **226** (optional): The telematics gateway **108** receives an update to the wake-up request from the on-board machine application or a human machine interface **102.** The update to the wake-up request pertains to any of: cancelling the wake-up request, changing the timestamp, changing the system action, deleting the wake-up request. Action **214** (or optional action **212**) can then be entered again with the thus updated wake-up request.

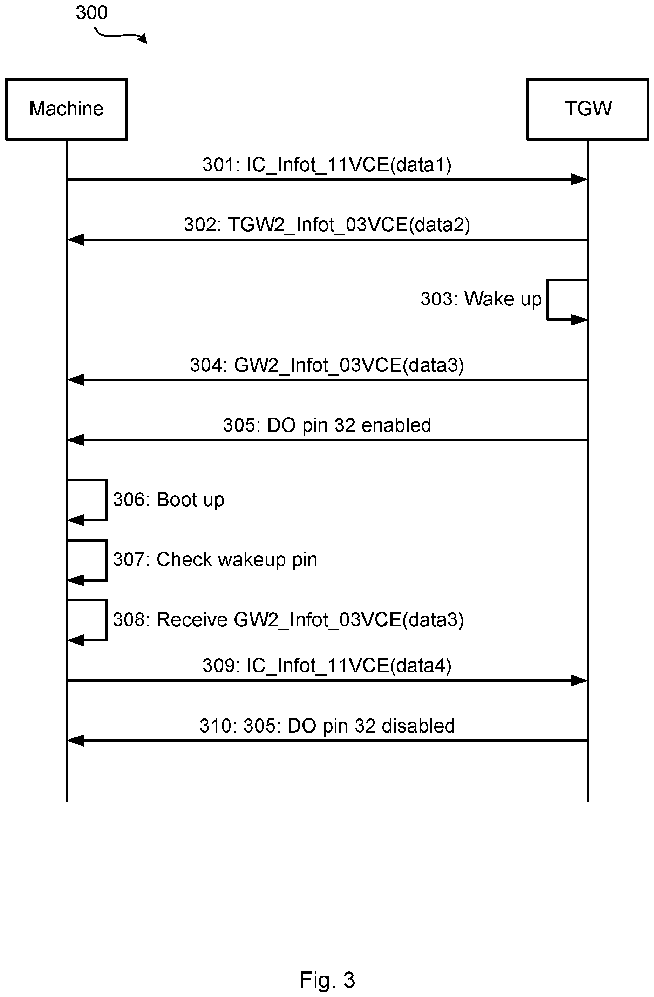

Reference is next made to FIG. 3. **FIG. 3** is a signaling diagram of an exemplary method **300** for configuring timestamped actions to be performed in a construction machine according to an example. The "machine" block in FIG. 3 represents all components of the machine control system 100 except the telematics gateway **108.**

Action **301:** A wake-up request message IC_Infot_11VCE(data1) with data1 being MmcuAction = MmcuAction_Create, MmcuContext = SYSTEM_ACTION, MmcuTimestamp = FUTURE_TIMESTAMP is sent from an on-board machine application in the construction machine to the telematics gateway **108** to request the telematics gateway **108** to wake up at a point of time in the future. The wake-up request message thus comprises a control action for the telematics gateway **108,** a timestamp, and a system action for the construction machine 400. The timestamp is a 32-bit Unix timestamp with a second resolution. The system action is a 16-bit value which is application specific.

Action **302:** The telematics gateway **108** performs error checking of the received wake-up request message. If the timestamp is in the past or in the very near future, and/or if all available wake up requests (maximum of 200) are already allocated, then an error message is issued. Else a success reply message TGW2_Infot_03VCE(data2) with data2 being WakeUpId = ALLOCATED ID, WakeUpContext = SYSTEM ACTION, WakeUpTimestamp = FUTURE_TIMESTAMP, WakeUpResponse = WakeUpResponse_Success is returned to the machine. The success reply message thus comprises an allocated wake-up identifier. A real-time clock in the telematics gateway **108** is programmed to wake up at the required time.

### Time passes.

Action **303:** Once the programmed time has passed in the real-time clock (and thus the timer expires), the real-time clock wakes up the telematics gateway **108.**

Action **304:** The telematics gateway **108** proceeds to send a message TGW2_Infot_03VCE(data3), where data3 equals WakeUpId = ALLOCATED ID, WakeUpContext = SYSTEM ACTION, WakeUpTimestamp = FUTURE_TIMESTAMP, WakeUpResponse = WakeUpResponse_WakeUp. Hence, a message is sent with the wakeup action, the associated system action and the timestamp it was triggered to a communication bus **112** implemented in the construction machine.

Action **305:** The telematics gateway **108** enables digital output (DO) port 32. That is, DO pin 32 is set to 1. This output is connected to the machine master electric controller **106** and a relay.

Action **306:** The relay powers on the machine master electric controller **106** and the HMI, causing them to boot up.

Action **307:** Once the machine master electric controller **106** is booted up, it checks the connected wakeup pin to understand the wakeup reason. If the wakeup pin is asserted (i.e., it has value 1) by the telematics gateway **108** (which it should be according to action 305) it will be fully operational, else the machine master electric controller **106** will enter a low power state.

Action **308:** The machine master electric controller **106** receives the message GW2_Infot_03 VCE(data3) (routed via the HMI) as sent in action **304.** The system action embedded in the message will determine what action the machine master electric controller **106** will take. E.g., "system action 1" could mean "Turn on diesel heater", whereas "system action 2" could mean "Turn off diesel heater", and so on.

Action **309:** The machine master electric controller **106** sends back an acknowledgement message, IC_Infot_11VCE(data4) with data4 being MmcuAction = MmcuAction _Acknowledge, MmcuContext = SYSTEM_ACTION, WakeUpTimestamp = FUTURE_TIMESTAMP, to the telematics gateway **108.** This message thus contains the associated system action identifier and the programmed timestamp.

Action **310:** By receiving the acknowledgement message with the correct system action identifier and timestamp, the telematics gateway **108** understands that the machine master electric controller **106** has seen the wake-up action and the associated context and timestamp. The telematics gateway **108** therefore stops sending the wake-up CAN message and disables the wakeup pin. That is, DO pin 32 is set to 0.

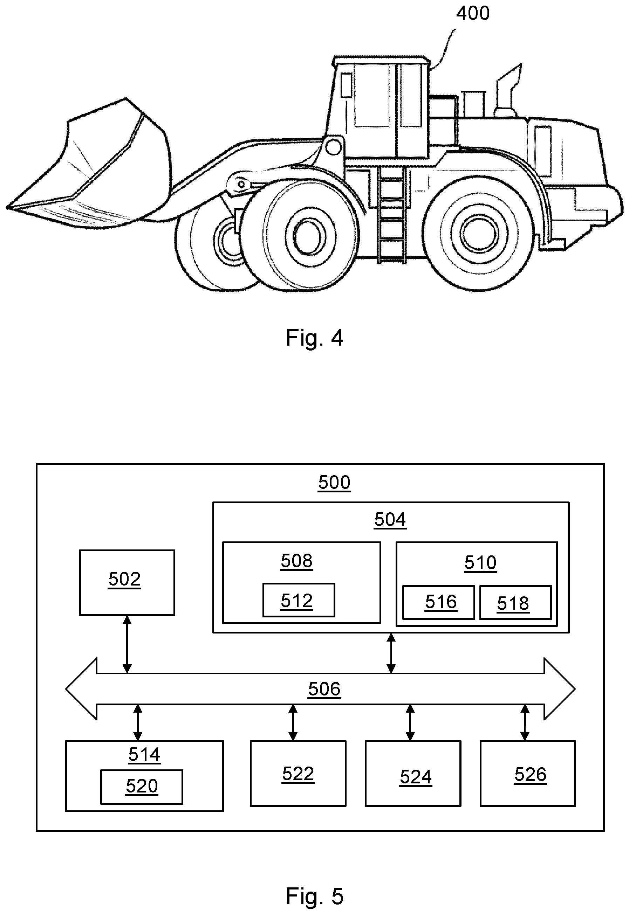

**FIG. 4** is an exemplary illustration of a construction machine **400** according to an example. The construction machine **400** comprises the computer system **100** as herein disclosed and is thus configured to perform methods as herein disclosed. Non-limiting examples of construction machines **400** are excavators, bulldozers, wheel loaders, backhoe loaders, motor graders, skid steer loaders, dump trucks, asphalt pavers, cranes, hydraulic breakers, trenchers, scrapers, compactors, pile drivers, and concrete mixers.

**FIG. 5** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a communication bus **506.** The computer system **500** may include at least one computing device having the processing circuitry **502.** The communication bus **506** provides an interface for system components including, but not limited to, the memory **504** and the processing circuitry **502.** The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The communication bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502.** A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502.** In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502.** The processing circuitry **502** may serve as a controller or control system for the computer system **500** that is to implement the functionality described herein.

The computer system **500** may include an input device interface **522** (comprising a human machine interface or being operatively connected to a human machine interface) configured to receive input and selections to be communicated to the computer system **500** when executing instructions, such as from a keyboard, mouse, touch-sensitive surface, etc. Such input devices may be connected to the processing circuitry **502** through the input device interface **522** coupled to the communication bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Examples of the herein disclosed embodiments will be presented next.

Example 1: A computer system **100, 500** comprising processing circuitry **502** configured to: receive a wake-up request at a telematics gateway **108** in a construction machine **400** from an on-board machine application in the construction machine **400,** the wake-up request comprising a control action for the telematics gateway 108, a timestamp, and a system action for the construction machine **400;** set a timer in the telematics gateway **108** based on the control action and the timestamp; send, responsive to the timer expiring, the system action and the timestamp from the telematics gateway **108** to a communication bus **506** implemented in the construction machine **400;** initiate, by the telematics gateway **108,** the machine master electric controller **106** to wake up from an unpowered state; read, by the machine master electric controller **106,** the system action and the timestamp on the communication bus **506;** and acknowledge receipt of the system action and the timestamp by the machine master electric controller **106** to the telematics gateway **108.**

Example 2: The computer system **100, 500** of example 1, where the control action pertains to at least one of: setting the timer, updating the timer, cancelling the timer, listing all set timers.

Example 3: The computer system **100, 500** of any of examples 1-2, where the system action pertains to at least one of: preheating, cooling, ventilating the construction machine **400,** turn on/off work lights in the construction machine **400,** stop/start battery charging of the construction machine **400,** perform on-board diagnostics in the construction machine **400,** waking up a machine application controller **104** in the construction machine 400.

Example 4: The computer system **100, 500** of any of examples 1-3, where the processing circuitry **502** is further configured to: perform an error check of the wake-up request by the telematics gateway **108** before setting the timer.

Example 5: The computer system **100, 500** of any of examples 1-4, where the timer is run by a real-time clock in the telematics gateway **108** whilst rest of functionality of the gateway is in a sleep state.

Example 6: The computer system **100, 500** of any of examples 1-5, where the processing circuitry **502** is further configured to cause the telematics gateway **108** to initiate the machine master electric controller **106** to be woken up from the unpowered state by setting a digital output that is connected to an electrically controlled switch that powers the machine master electric controller **106.**

Example 7: The computer system **100, 500** of any of examples 1-6, where the processing circuitry **502** is further configured to continuously send the system action and the timestamp from the telematics gateway **108** to the communication bus **112, 506** until the telematics gateway **108** having receiving acknowledgement of receipt from the machine master electric controller **106.**

Example 8: The computer system **100, 500** of any of examples 1-7, where the processing circuitry **502** is further configured to: initiate, by the machine master electric controller **106,** the system action in accordance with the timestamp.

Example 9: The computer system **100, 500** of any of examples 1-8, where the processing circuitry **502** is further configured to: receive an update to the wake-up request at the telematics gateway **108** from the on-board machine application or a human machine interface **102,** where the update to the wake-up request pertains to any of: cancelling the wake-up request, changing the timestamp, changing the system action, deleting the wake-up request.

Example 10: A construction machine **400** comprising the computer system **100, 500** of any of examples 1-9.

Example 11: A computer-implemented method **200** for configuring timestamped actions to be performed in a construction machine **400** where a machine master electric controller **106** is in an unpowered state, the method **200** being performed by processing circuitry **502** of a computer system **100, 500** and comprising: receiving **210** a wake-up request at a telematics gateway **108** in the construction machine **400** from an on-board machine application in the construction machine **400,** the wake-up request comprising a control action for the telematics gateway **108,** a timestamp, and a system action for the construction machine **400;** setting **214** a timer in the telematics gateway **108** based on the timestamp; sending **216,** responsive to the timer expiring, the system action and the timestamp from the telematics gateway **108 to** a communication bus **112, 506** implemented in the construction machine **400;** initiating **218,** by the telematics gateway **108,** the machine master electric controller **106** to wake up from the unpowered state; reading **220,** by the machine master electric controller **106,** the system action and the timestamp on the communication bus **112, 506;** and acknowledging **222** receipt of the system action and the timestamp by the machine master electric controller **106** to the telematics gateway **108.**

Example 12: The method **200** of example 11, where the control action pertains to at least one of: setting the timer, updating the timer, cancelling the timer, listing all timers.

Example 13: The method **200** of any of examples 11-12, where the system action pertains to at least one of: preheating, cooling, ventilating the construction machine **400,** turn on/off work lights in the construction machine **400,** stop/start battery charging of the construction machine **400,** perform on-board diagnostics in the construction machine **400,** waking up a machine application controller **104** in the construction machine **400.**

Example : 14 The method **200** of any of examples 11-13, further comprising: performing **212** an error check of the wake-up request by the telematics gateway **108** before setting the timer.

Example 15: The method **200** of any of examples 11-14, where the telematics gateway **108** initiates the machine master electric controller **106** to be woken up from the unpowered state by setting a digital output that is connected to an electrically controlled switch that powers the machine master electric controller **106.**

Example 16: The method **200** of any of examples 11-15, where the system action and the timestamp are continuously sent from the telematics gateway **108** to the communication bus **112, 506** until the telematics gateway **108** having receiving acknowledgement of receipt from the machine master electric controller **106.**

Example 17: The method **200** of any of example 11-16, further comprising: initiating **224,** by the machine master electric controller **106,** the system action and in accordance with the timestamp.

Example 18: The method **200** of any of example 13-17, further comprising: receiving **226** an update to the wake-up request at the telematics gateway **108** from the on-board machine application or a human machine interface **102,** where the update to the wake-up request pertains to any of: cancelling the wake-up request, changing the timestamp, changing the system action, deleting the wake-up request.

Example 19: A computer program product comprising program code for performing, when executed by the processing circuitry **502,** the method **200** of any of examples 13-18.

Example 20: A non-transitory computer-readable storage medium comprising instructions, which when executed by the processing circuitry **502,** cause the processing circuitry **502** to perform the method 200 of any of examples 13-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100, 500) comprising processing circuitry (502) configured to:
- receive a wake-up request at a telematics gateway (108) (108) in a construction machine (400) from an on-board machine application in the construction machine (400), the wake-up request comprising a control action for the telematics gateway (108) (108), a timestamp, and a system action for the construction machine (400);
- set a timer in the telematics gateway (108) (108) based on the control action and the timestamp;
- send, responsive to the timer expiring, the system action and the timestamp from the telematics gateway (108) (108) to a communication bus (112, 506) implemented in the construction machine (400);
- initiate, by the telematics gateway (108) (108), the master electric controller (106) to wake up from an unpowered state;
- read, by the master electric controller (106), the system action and the timestamp on the communication bus (112, 506); and
- acknowledge receipt of the system action and the timestamp by the master electric controller (106) to the telematics gateway (108) (108).

2. The computer system (100, 500) of claim 1, wherein the control action pertains to at least one of: setting the timer, updating the timer, cancelling the timer, listing all set timers.

3. The computer system (100, 500) of any of claims 1-2, wherein the system action pertains to at least one of: preheating, cooling, ventilating the construction machine (400), turn on/off work lights in the construction machine (400), stop/start battery charging of the construction machine (400), perform on-board diagnostics in the construction machine (400), waking up a machine application controller (104) in the construction machine (400).

4. The computer system (100, 500) of any of claims 1-3, wherein the processing circuitry (502) is further configured to:
- perform an error check of the wake-up request by the telematics gateway (108) (108) before setting the timer.

5. The computer system (100, 500) of any of claims 1-4, wherein the timer is run by a real-time clock in the telematics gateway (108) (108) whilst rest of functionality of the gateway (108) is in a sleep state.

6. The computer system (100, 500) of any of claims 1-5, wherein the processing circuitry (502) is further configured to cause the telematics gateway (108) (108) to initiate the master electric controller (106) to be woken up from the unpowered state by setting a digital output that is connected to an electrically controlled switch that powers the master electric controller (106).

7. The computer system (100, 500) of any of claims 1-6, wherein the processing circuitry (502) is further configured to continuously send the system action and the timestamp from the telematics gateway (108) (108) to the communication bus (112, 506) until the telematics gateway (108) (108) having receiving acknowledgement of receipt from the master electric controller (106).

8. The computer system (100, 500) of any of claims 1-7, wherein the processing circuitry (502) is further configured to:
- initiate, by the master electric controller (106), the system action in accordance with the timestamp.

9. The computer system (100, 500) of any of claims 1-8, wherein the processing circuitry (502) is further configured to:
- receive an update to the wake-up request at the telematics gateway (108) (108) from the on-board machine application or a human machine interface (102), wherein the update to the wake-up request pertains to any of: cancelling the wake-up request, changing the timestamp, changing the system action, deleting the wake-up request.

10. A construction machine (400) comprising the computer system (100, 500) of any of claims 1-9.

11. A computer-implemented method (200) for configuring timestamped actions to be performed in a construction machine (400) where a master electric controller (106) is in an unpowered state, the method (200) being performed by processing circuitry (502) of a computer system (100, 500) and comprising:
- receiving (210) a wake-up request at a telematics gateway (108) (108) in the construction machine (400) from an on-board machine application in the construction machine (400), the wake-up request comprising a control action for the telematics gateway (108) (108), a timestamp, and a system action for the construction machine (400);
- setting (214) a timer in the telematics gateway (108) (108) based on the timestamp;
- sending (216), responsive to the timer expiring, the system action and the timestamp from the telematics gateway (108) (108) to a communication bus (112, 506) implemented in the construction machine (400);
- initiating (218), by the telematics gateway (108) (108), the master electric controller (106) to wake up from the unpowered state;
- reading (220), by the master electric controller (106), the system action and the timestamp on the communication bus (112, 506); and
- acknowledging (222) receipt of the system action and the timestamp by the master electric controller (106) to the telematics gateway (108) (108).

12. The method (200) of claim 11, further comprising:
- performing (212) an error check of the wake-up request by the telematics gateway (108) (108) before setting the timer.

13. The method (200) of any of claims claim 11-12, further comprising:
- initiating (224), by the master electric controller (106), the control action for the system action and in accordance with the timestamp.

14. A computer program product comprising program code for performing, when executed by the processing circuitry (502), the method (200) of any of claims 11-13.

15. A non-transitory computer-readable storage medium comprising instructions, which when executed by the processing circuitry (502), cause the processing circuitry (502) to perform the method (200) of any of claims 11-13.
